# EUROPEAN PATENT APPLICATION

(11) **EP 1 524 783 A2**
(43) Date of publication of application: **20.04.2005**
(21) Application number: 04019316.1
(22) Date of filing: 13.08.2004
(51) Int. Cl.: H04B 10/155

(54) **RZ-AMI optical transmitter module**

(30) Priority: 14.10.2003 KR 2003071287
(71) Applicant: Samsung Electronics Co., Ltd., Suwon-si, Gyeonggi-do (KR)
(72) Inventor: Kim, Hoon, Yeongtong-gu, Suwon-si, Gyeonggi-do (KR); Oh, Yun-Je, Yeongtong-gu, Suwon-si, Gyeonggi-do (KR); Hwang, Seong-Taek, Yeongtong-gu, Suwon-si, Gyeonggi-do (KR)
(74) Representative: Grünecker, Kinkeldey, Stockmair & Schwanhäusser Anwaltssozietät

(57) **Abstract**

Disclosed is an optical transmitter module comprising: a precoder to generate an encoded binary signal from an electric signal; an amplifier to amplify the binary signal; a converter to convert the amplified encoded binary signal into a limited ternary signal; a frequency generator to generate a sine wave having a predetermined frequency; a multiplier to multiply the ternary signal using the sine wave; a light source to generate a coherent CW light having a constant intensity; and a Mach-Zehnder modulator to modulate the CW light according to the ternary signal from the multiplier.

## Description

The present invention relates to an optical transmission apparatus, and to a corresponding transmission method, and more particularly to a return-to-zero optical transmission apparatus which has a high receiving sensitivity and opposes the nonlinearity aspects of an optical fiber.

In general, a dense wavelength division multiplexing (hereinafter, referred to as "DWDM') optical transmission system transmits an optical signal (which includes a plurality of channels having different wavelengths from each other) through one optical fiber. Accordingly, the DWDM optical transmission system has improved transmission efficiency. DWDM optical transmission systems capable of transmitting more than one hundred channels through one optical fiber have been commercialized recently. Further, research is being actively conducted to develop DWDM systems which simultaneously transmit more than two hundred 40 Gbps channels, through one optical fiber, to provide a transmission speed of 10Tbps or more.

Recently, with such DWDM optical transmission systems, it has been found that a return-to-zero (hereinafter, referred to as "RZ") method is superior to a non-return-to-zero (hereinafter, referred to as "NRZ") method as an optical modulation method. This is due to the receiving sensitivity and nonlinearity of an optical fiber of the DWDM optical transmission system.

Meanwhile, according to an alternate-mark-inversion (hereinafter, referred to as "AMI") modulation method, an optical signal has a phase inverted at each bit while carrying information in an intensity of the optical signal.

Furthermore, the an RZ-AMI method, which is a signal processing method combining the RZ method and the AMI method, has the phase inversion property of the AMI method, and a signal that has the same intensity information as the RZ method.

In the RZ-AMI method, the RZ modulation method is strongly opposes the nonlinearity aspects of an optical fiber and the like in an optical communication system having a data transmission speed of more than 20 Gbps. The carrier frequency components are suppressed by the phase inversion generated at each bit, thus the RZ-AMI method is strongly apposes Brillouin nonlinearity. Moreover, a signal according to the RZ-AMI method has a small spectrum width, so that the DWDM optical transmission system can easily secure a large number of channels.

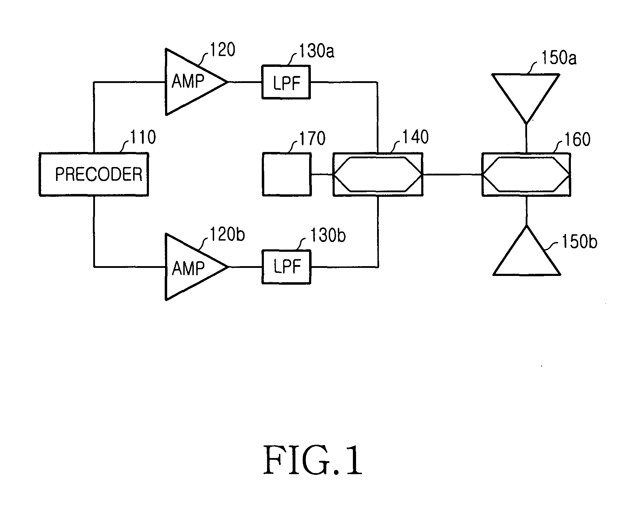

FIG 1 is a block diagram of an optical transmitter module including two Mach-Zehnder modulators according to the prior art. The optical transmitter module includes a precoder 110, amplifiers 120a and 120b, converters 130a and 130b, frequency generators 150a and 150b, a first Mach-Zehnder modulator 140, a light source 170, and a second Mach-Zehnder modulator 160.

The precoder 110 generally includes a one-bit delay device and an exclusive-OR device, and encodes and outputs inputted binary signals. The amplifiers 120a and 120b amplify and output the binary signals encoded by the precoder 110, respectively. The converters 130a and 130b convert the binary signals amplified by the amplifiers 120a and 120b into ternary signals, respectively, and output the converted ternary signals. The respective converters 130a and 130b includes a low pass filter having a bandwidth corresponding to a quarter of a data transmission speed.

The light source 170 includes a laser light source and outputs coherent CW light into the first Mach-Zehnder modulator 140. The first Mach-Zehnder modulator 140 optical-modulates and outputs the ternary signals outputted from the converters 130a and 130b. Herein, the first Mach-Zehnder modulator 140 is biased at a null point.

The second Mach-Zehnder modulator 160 is arranged between the first Mach-Zehnder modulator 140 and the respective frequency generators 150a and 150b. Therefore, the optical-modulated signals inputted from the first Mach-Zehnder modulator 140 are loaded onto a sine wave inputted from the frequency generators 150a and 150b. In this manner, carrier-suppressed retum-to-zero signals are generated.

Consequently, the first Mach-Zehnder modulator 140 converts a ternary signal, which is an electric signal, into an optical duobinary signal and outputs the converted optical duobinary signal. The second Mach-Zehnder modulator 160 generates an RZ-AMI signal having a phase inverted at each bit, which is also called "optical duobinary carrier-suppressed RZ (DCS-RZ) signal."

However, the conventional optical transmitter module includes two Mach-Zehnder modulators. Therefore, the cost of a conventional optical transmitter module is high. Also, the conventional optical transmitter module has many limitations, including that an additional plurality of RF drivers are required, thus it is necessary to synchronize operations of the two Mach-Zehnder modulators.

Accordingly, the present invention has been made to reduce or overcome the above-mentioned problems occurring in the prior art.

It is the object of the present invention to provide an optical transmitter module having only one Mach-Zehnder modulator.

This object is solved by the subject matter of the independent claims.

Preferred embodiments are defined in the dependent claims.

In accordance with the principles of the present invention, an optical transmitter module is provided and includes: a precoder to generate an encoded binary signal from an electric signal; an amplifier to amplify the binary signal; a converter to convert the amplified encoded binary signal into a limited ternary signal; a frequency generator to generate a sine wave having a predetermined frequency; a multiplier to multiply the ternary signal using the sine wave; a light source to generate a coherent CW light having a constant intensity; and a Mach-Zehnder modulator to modulate the CW light according to the ternary signal from the multiplier.

The present invention will be more apparent from the following detailed description taken in conjunction with the accompanying drawings, in which:
FIG. 1 is a block diagram of an optical transmitter module according to the prior art;
FIG. 2 is a block diagram of an optical transmitter module including multipliers according to a first embodiment of the present invention;
FIG. 3 is a block diagram of an optical transmitter module including a multiplier according to a first embodiment of the present invention;
FIG. 4 is an eye diagram for explaining an operation characteristic of a converter shown in FIG. 2;
FIG. 5 is an eye diagram for explaining an operation characteristic of a multiplier shown in FIG. 2;
FIG. 6 is an eye diagram for explaining an operation characteristic of a Mach-Zehnder modulator shown in FIG 2; and
FIG. 7 is a graph for explaining an operation characteristic of a Mach-Zehnder modulator shown in FIG. 2.

Hereinafter, preferred embodiments of an RZ-AMI optical transmitter module according to the present invention will be described with reference to the accompanying drawings. For the purposes of clarity and simplicity, a detailed description of known functions and configurations incorporated herein will be omitted as it may make the subject matter of the present invention unclear.

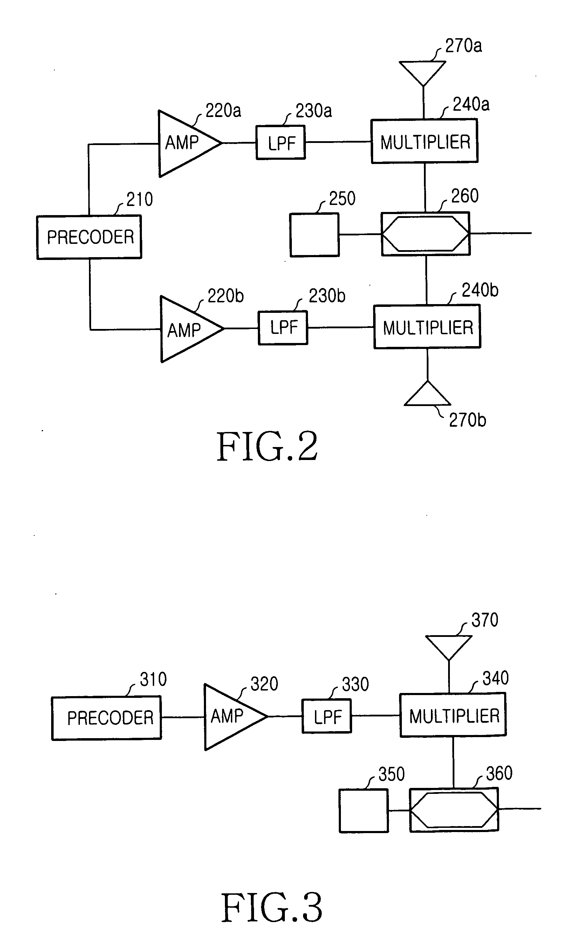

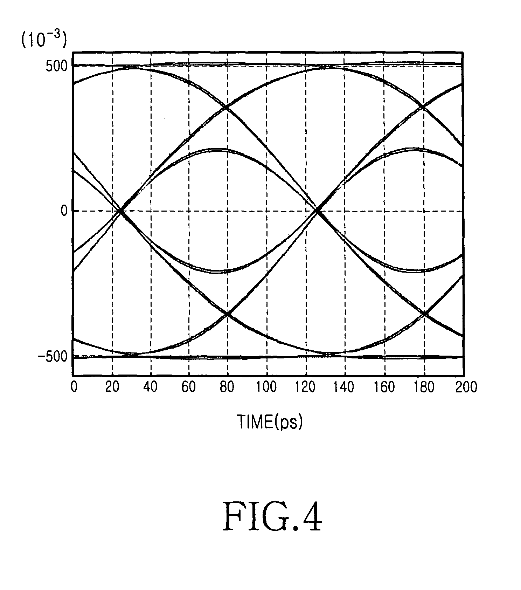

FIG. 2 is a block diagram of an optical transmitter module including multipliers according to a first embodiment of the present invention. FIGs. 4 to 6 are eye diagrams for explaining an operation characteristic of the optical transmitter module shown in FIG. 2. Referring to FIG. 2 and FIGs. 4 to 6, the optical transmitter module includes a precoder 210, amplifiers 220a and 220b, converters 230a and 230b, frequency generators 270a and 270b, multipliers 240a and 240b, a light source 250, and a Mach-Zehnder modulator 260.

The precoder 210 includes a one-bit delay device and an exclusive-OR device, and encodes and outputs inputted binary signals. The binary signals passing the precoder 210 are amplified by the respective amplifiers 220a and 220b.

FIG. 4 shows an eye diagram of ternary signals converted in the converters 230a and 240b. The respective converters 230a and 230b may include a low pass filter and the like. It converts the binary signals amplified by the amplifier into ternary signals.

The frequency generators 270a and 270b generate sine waves having a half frequency of the ternary signal generated from the converters 230a and 230b.The generated sine waves are inputted to the multipliers 240a and 240b, respectively.

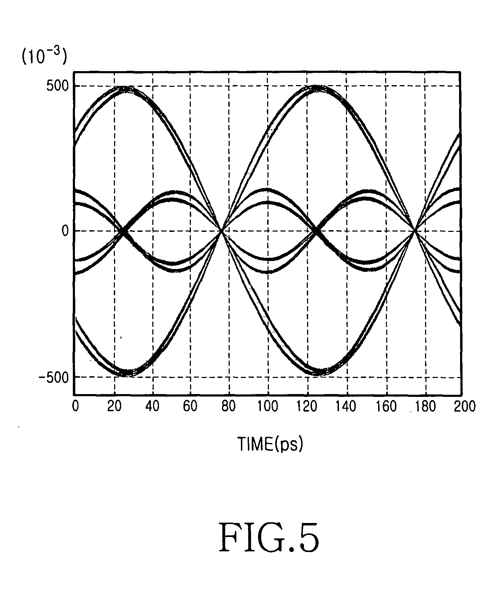

FIG. 5 shows an eye diagram of signals obtained by the multipliers 240a and 240b which multiplies the ternary signals by the sine wave. The respective multipliers 240a and 240b multiply the ternary signal inputted from the respective converters 230a and 230b by the sine wave generated from the respective frequency generators 270a and 270b.

The light source 250 may include a semiconductor laser, or other conventional lasers or the like, which can generate coherent CW light having a constant intensity. The Mach-Zehnder modulator 260 is connected to the multipliers 240a and 240b and the light source 250. The Mach-Zehnder modulator 260 converts the light inputted from the light source 250 into RZ-AMI signals according to signals inputted from the multipliers 240a and 240b.

The Mach-Zehnder modulator 260 aligns signals inputted from the multipliers 240a and 240b at a null point which is a minimum value in the transfer characteristic of the Mach-Zehnder modulator 260. The ternary signals inputted to the Mach-Zehnder modulator 260 have the same voltage as a half-wave voltage (V_{π}) of the Mach-Zehnder modulator 260 by the sine wave generated from the frequency generators 270a and 270b.

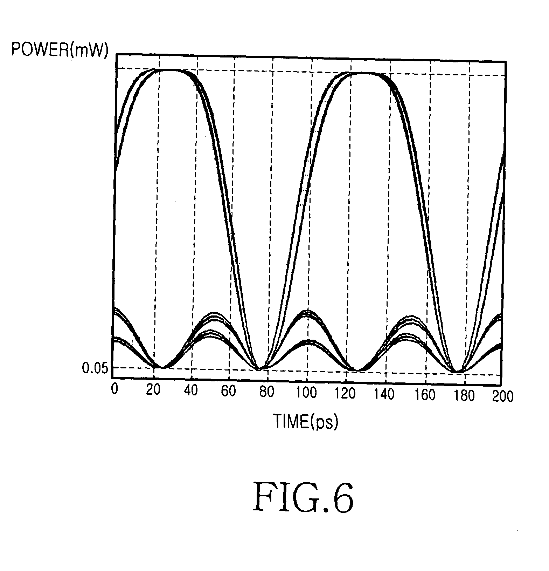

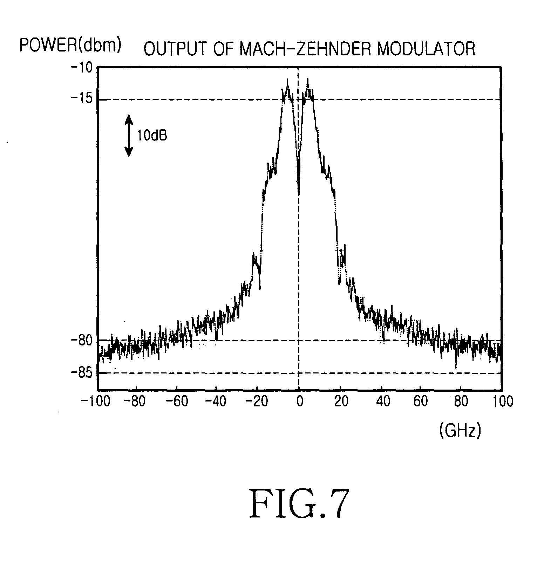

FIGs. 6 and 7 illustrate an eye diagram and a spectrum of an RZ-AMI signal outputted from the Mach-Zehnder modulator. FIG. 6 shows that the RZ-AMI signal has the same pattern as that of an RZ signal. FIG. 7 shows that carrier component is suppressed owing to a phase inversion effect.

FIG. 3 is a block diagram of an optical transmitter module including a multiplier according to a first embodiment of the present invention. Referring to FIG. 3, the optical transmitter module includes a precoder 310, an amplifier 320, a converter 330, a multiplier 340, a light source 350, a Mach-Zehnder modulator 360, and a frequency generator 370. The precoder 310 encodes an electric signal into a binary signal and outputs the encoded binary signal. The amplifier 320 amplifies the binary signal encoded in the precoder 310. The converter 330 converts the binary signal amplified in the amplifier 320 into a limited ternary signal. The frequency generator 370 generates a sine wave having a half frequency. The multiplier 340 multiplies the ternary signal converted in the converter 330 by the sine wave generated in the frequency generator 370. The light source 350 generates a coherent CW light having a constant intensity. The Mach-Zehnder modulator 360 is connected to the multiplier 340 and the light source 350, thereby forming a single-arm X-cut structure for modulating the light according to the ternary signal inputted from the multiplier 340.

The respective Mach-Zehnder modulators applied in the embodiments of the present invention have a Z-cut structure or an X-cut structure. Mach-Zehnder modulators of the Z-cut structure are driven by ternary signals applied to both ends thereof. The Mach-Zehnder modulators of the X-cut structure are driven by ternary signals applied to one end thereof.

The optical transmitter module according to the first embodiment of the present invention includes a dual-arm Z-cut-type Mach-Zehnder modulator having the Z-cut structure. Thus, an RZ-AMI signal is generated by two ternary signals having opposite phases from each other. In contrast, the optical transmitter module according to the second embodiment of the present invention includes a single-arm X-cut-type Mach-Zehnder modulator having the X-cut structure. Thus, a ternary signal applied to one end thereof is modulated into an RZ-AMI signal.

According to the present invention, the optical transmitter module employing the RZ-AMI modulation method uses only one Mach-Zehnder modulator, thus enabling a manufacturing cost reduction of the optical transmitter module. Further, the RZ-AMI modulation method enables simplified construction of the optical transmitter module, thereby improving productivity and reliability of goods.

While the invention has been shown and described with reference to certain preferred embodiments thereof, it will be understood by those skilled in the art that various changes in form and details may be made therein without departing from the scope of the invention as defined by the appended claims.

## Claims

1. An optical transmitter module comprising:
a precoder to generate an encoded binary signal from an electric signal;
an amplifier to amplify the binary signal;
a converter to convert the amplified encoded binary signal into a limited ternary signal;
a frequency generator to generate a sine wave having a predetermined frequency;
a multiplier to multiply the ternary signal using the sine wave;
a light source to generate a coherent CW light having a constant intensity; and
a Mach-Zehnder modulator to modulate the CW light according to the ternary signa from the multiplier.

2. The optical transmitter module as claimed in claim 1, wherein the frequency generator generates a sine wave having a half frequency

3. The optical transmitter module as claimed in claim 2, wherein the converter includes a low pass filter having a bandwidth corresponding to a quarter of a transmission speed of the electric signal.

4. The optical transmitter module as claimed in one of claims 1 to 3, wherein the Mach-Zehnder modulator includes a dual-arm Z-cut-type Mach-Zehnder modulator.

5. The optical transmitter module as claimed in one of claims 1 to 3, wherein the Mach-Zehnder modulator includes a single-arm X-cut-type Mach-Zehnder modulator.

6. The optical transmitter module as claimed in one of claims 1 to 5, wherein the frequency generator generates a sine wave having a half frequency of a clock frequency of the ternary signal from the converter to the multiplier.

7. The optical transmitter module as claimed in one of claims 1 to 6, wherein light source includes a semiconductor laser.

8. The optical transmitter module as claimed in one of claims 1 to 7, further including a plurality of amplifiers, a plurality of converters a plurality of frequency generators, and a plurality of multipliers, wherein respective binary signals passing the precoder are processed by respective amplifiers, converters, frequency generators and multipliers.

9. An optical transmitting method comprising the steps of:
generating an encoded binary signal from an electrical signal by a precoder;
amplifying the binary signal by an amplifier;
converting the amplified encoded binary signal into a limited ternary signal by a converter;
generating a sine wave having a predetermined frequency by a frequency generator;
multiplying the ternary signal using the sine wave by a multiplexer;
generating a coherent CW light having a constant intensity by a light source; and
modulating the CW light according to the ternary signal from the step of multiplying by a Mach-Zehnder modulator.

10. The optical transmitting method of claim 9 adapted to operate the optical transmitter module according to one of claims 1 to 8.
